(19) **Europäisches Patentamt / European Patent Office / Office européen des brevets**

(11) **EP 4 105 821 B1**

(12) **EUROPEAN PATENT SPECIFICATION**

(45) Date of publication and mention
of the grant of the patent:
**06.11.2024  Bulletin 2024/45**

(21) Application number: **21855273.5**

(22) Date of filing: **30.06.2021**

(51) International Patent Classification (IPC):
*G06V 40/40* (2022.01)   *G06V 40/16* (2022.01)
*G06V 10/44* (2022.01)   *G06V 10/764* (2022.01)
*G06V 10/774* (2022.01)   *G06V 10/778* (2022.01)
*G06V 10/82* (2022.01)   *G06F 21/60* (2013.01)
*G06N 3/04* (2023.01)   *G06N 3/0455* (2023.01)
*G06N 3/0464* (2023.01)   *G06N 3/08* (2023.01)
*G06N 3/09* (2023.01)   *G06F 21/32* (2013.01)

(52) Cooperative Patent Classification (CPC):
**G06F 21/32; G06N 3/0455; G06N 3/0464;**
**G06N 3/09; G06V 10/454; G06V 10/764;**
**G06V 10/7747; G06V 10/778; G06V 10/82;**
**G06V 40/161; G06V 40/168; G06V 40/45;**
G06F 2221/2133

(86) International application number:
**PCT/CN2021/103452**

(87) International publication number:
**WO 2022/033220 (17.02.2022 Gazette 2022/07)**

(54) **FACE LIVENESS DETECTION METHOD, SYSTEM AND APPARATUS, COMPUTER DEVICE, AND STORAGE MEDIUM**

VERFAHREN, SYSTEM UND VORRICHTUNG ZUR ERKENNUNG VON GESICHTSECHTHEIT, COMPUTERVORRICHTUNG UND SPEICHERMEDIUM

PROCÉDÉ, SYSTÈME ET APPAREIL DE DÉTECTION DE VIVACITÉ DE VISAGE, DISPOSITIF INFORMATIQUE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **14.08.2020  CN 202010815513**

(43) Date of publication of application:
**21.12.2022  Bulletin 2022/51**

(73) Proprietor: **Tencent Technology (Shenzhen) Company Limited**
**Shenzhen, Guangdong, 518057 (CN)**

(72) Inventors:
• **LUO, Zhao**
**Shenzhen, Guangdong 518057 (CN)**
• **BAI, Kun**
**Shenzhen, Guangdong 518057 (CN)**

(74) Representative: **Reddie & Grose LLP**
**The White Chapel Building**
**10 Whitechapel High Street**
**London E1 8QS (GB)**

(56) References cited:
**CN-A- 105 227 316    CN-A- 107 590 465**
**CN-A- 111 325 175    CN-A- 111 680 672**
**US-A1- 2019 213 816    US-A1- 2020 065 562**

• **SALEM MILAD ET AL: "Utilizing Transfer Learning and Homomorphic Encryption in a Privacy Preserving and Secure Biometric Recognition System", COMPUTERS, vol. 8, no. 1, 29 December 2018 (2018-12-29), pages 3, XP093062545, DOI: 10.3390/computers8010003**

## Description

RELATED APPLICATION

This application claims priority to Chinese Patent Application No. 2020108155133, entitled "METHOD, SYSTEM, AND APPARATUS FOR FACE LIVENESS DETECTION, COMPUTER DEVICE, AND STORAGE MEDIUM" filed with the China National Intellectual Property Administration on August 14, 2020.

FIELD OF THE TECHNOLOGY

This application relates to the technical field of computers, and in particular, to methods, a system, a computer device, and a computer-readable storage medium for face liveness detection.

BACKGROUND OF THE DISCLOSURE

Liveness detection techniques emerge with the development of computer technology, in order to authenticate a user's identity accurately and conveniently. The liveness detection techniques is capable to examine based on biometric features whether the user is a live person who is qualified, and is invulnerable against common attacks such as a photo, a deep fake, a mask, and a facial occlusion.

In conventional technology, it is necessary to first obtain an original to-be-detected image and then perform liveness detection based on the to-be-detected image, so as to authenticate a user's identity through the liveness detection. The obtained to-be-detected image concerns user's privacy, and the to-be-detected image divulged from analysis and processing during the liveness detection would result in a loss of the user's privacy. As the liveness detection has increasingly widespread applications, how to avoid such privacy loss has become an urgent problem to be resolved.

Some examples of prior art dealing with this problem are the scientific article Salem Milad et al.: "Utilizing Transfer Learning and Homomorphic Encryption in a Privacy Preserving and Secure Biometric Recognition System", Computers, vol. 8, no. 1, 29 December 2018 (2018-12-29), page 3, XP093062545, DOI: 10.3390/computers8010003 and the patent document US 2019/213816 A1 (Grigorov Filip et al.) published 11-th of July 2019.

SUMMARY

A method for face liveness detection according to claim 1 is provided.

Another alternative method for face liveness detection according to claim 7 is also provided.

A method for training a model according to claim 8 is provided.

A system for face liveness detection is provided as recited in claim 9.

A computer device according to claim 10 is provided.

One or more non-volatile computer-readable storage media according to claim 11 is provided.

BRIEF DESCRIPTION OF THE DRAWINGS

Figure 1 is a diagram of an application environment of a method for face liveness detection according to an embodiment of the present disclosure.

Figure 2 is a schematic flowchart of a method for face liveness detection according to an embodiment of the present disclosure.

Figure 3 is a schematic diagram of encrypting a face image to obtain an encrypted image according to an embodiment of the present disclosure.

Figure 4 is a schematic architectural diagram of separate deployment of an encryption network and a detection network according to an embodiment of the present disclosure.

Figure 5 is a schematic flowchart of a method for face liveness detection according to another embodiment of the present disclosure.

Figure 6 is a diagram of training an encryption-detection model according to an embodiment of the present disclosure.

Figure 7 is a schematic flowchart of a method for face liveness detection according to another embodiment of the present disclosure.

Figure 8 is a schematic flowchart of a method for training a model according to an embodiment of the present disclosure.

Figure 9 is a structural block diagram of an apparatus for face liveness detection according to an embodiment of the present disclosure.

Figure 10 is a structural block diagram of an apparatus for face liveness detection according to another embodiment of the present disclosure.

Figure 11 is a structural block diagram of an apparatus for training a model according to an embodiment of the present disclosure.

Figure 12 is a diagram of an internal structure of a computer device according to an embodiment of the present disclosure.

DESCRIPTION OF EMBODIMENTS

In order to clarify objectives, technical solutions, and advantages of the present disclosure, hereinafter the present disclosure is further illustrated in detail with reference to the drawings and embodiments. Herein the specific embodiments described are intended for explaining the present disclosure.

A method for face liveness detection according to embodiments of the present disclosure applies computer vision technology and machine learning technology, which belongs to the artificial intelligence (AI) technology, to implement the liveness detection.

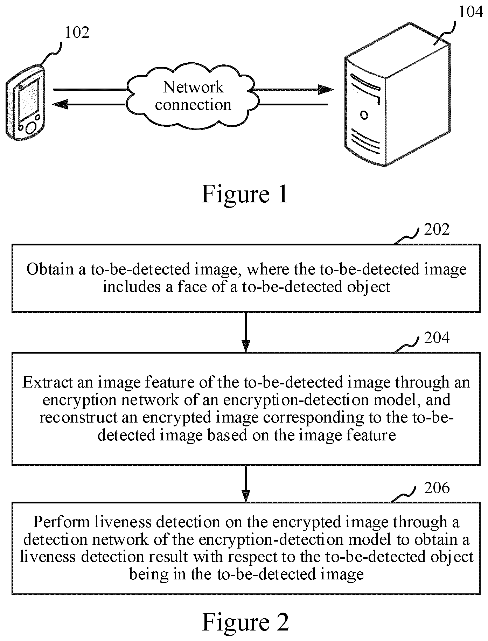

The method for face liveness detection according to an embodiment of the present disclosure may be applied to an application environment as shown in Figure 1. A terminal 102 communicates with a liveness detection server 104 via a network. Specifically, the terminal 102 may obtain a to-be-detected image, extract an image feature from the to-be-detected image through an encryption network of a trained encryption-detection model (i.e., a joint model for encryption and detection), reconstruct an encrypted image corresponding to the to-be-detected image based on the image feature, and perform liveness detection on the encrypted image through a detection network of the encryption-detection model to obtain a liveness detection result with respect to the to-be-detected object being in the to-be-detected image.

In conventional technology, an object of the liveness detection is generally the whole person. That is, a to-be-detected image includes the whole person, and biometric features of the whole person are extracted from the image to implement the liveness detection. Contrarily, the method for face liveness detection in embodiments of the present disclosure used an image including the face of the to-be-detected object as the to-be-detected image, and the liveness detection is performed on the face to obtain the liveness detection result, such that it is determined whether the face is live. That is, the liveness detection is based on features of the face rather than the whole person.

In some embodiments, the encryption network and the detection network of the encryption-detection model are trained in advance and may be separately deployed. For example, the encryption network is deployed on the terminal 102, while the detection network is deployed on the liveness detection server 104. In such case, the terminal 102 may obtain a to-be-detected image, extract an image feature from the to-be-detected image through the encryption network of the encryption-detection model, reconstruct an encrypted image corresponding to the to-be-detected image based on the image feature, and transmit the encrypted image to the liveness detection server. The liveness detection server 104 may receive the encrypted image, perform liveness detection on the encrypted image through the detection network of the encryption-detection model to obtain a liveness detection result with respect to a to-be-detected object being in the to-be-detected image, and return the liveness detection result to the terminal 102. In this embodiment, the terminal does not need to transmit the original to-be-detected image to the liveness detection server via a network, avoiding a divulgence risk of the to-be-detected image during network transmission and thereby avoiding a loss of user's privacy. In addition, the liveness detection server does not need to perform the liveness detection directly on the original to-be-detected image, avoiding a divulgence risk of the to-be-detected image during liveness detection processing and thereby further protecting the user's privacy.

The terminal 102 may be, but is not limited to, a personal computer, a notebook computer, a smartphone, a tablet computer, and a portable wearable device. The liveness detection server 104 may be implemented by an independent server or a server cluster including multiple servers.

In an embodiment, the encryption-detection model is based on an artificial neural network, and may be trained by a computer device. The computer device may obtain each training sample of multiple training samples, and each training sample includes a sample image and an actual liveness category corresponding to the sample image. The computer device extracts an image feature from the sample image through an encryption network of an initial neural network model, reconstructs an encrypted image corresponding to the sample image based on the image feature, and determines a first loss according to a difference between the sample image and the encrypted image. The computer device performs liveness detection on the encrypted image through a detection network of the initial neural network model to obtain a predicted liveness category corresponding to the sample image, and determines a second loss according to a difference between the actual liveness category and the predicted liveness category. The computer device adjusts a model parameter of the initial neural network model according to the first loss and the second loss. Then, the computer device returns to the step of obtaining each training sample of the multiple training samples, and the above training is repeated until the trained encryption-detection model has been obtained. The computer device for training the encryption-detection model may be a terminal or a server.

In a specific application scenario, in a case that a face verification device needs to authenticate an identity of a user, an image of the user's face may be collected and transmitted to the liveness detection server via a network. The liveness detection server performs data augmentation on the facial image to obtain multiple extended images corresponding to the facial image, then performs liveness detection on the extended images to obtain multiple intermediate detection results, respectively, and obtains the liveness detection result with respect to the to-be-detected object being in the to-be-detected image according to the intermediate detection results. The liveness detection server determines the user passes the identity authentication when it determines that the facial image uploaded by the terminal includes a live face. The user need not upload a large quantity of facial images, which reduces a network transmission delay, decreases the waiting time of the user, and hence improves user's experience. The face verification device may be a phone, a face recognition machine, or another device having an image collector.

The method for face liveness detection is provided in embodiments of the present disclosure. The encryption network and the detection network of the encryption-detection model, which is based on a neural network, are obtained through joint training. The encryption network is capable to ensure a degree of difference between the to-be-detected image and the encrypted image, and the detection network is capable to ensure accuracy of the liveness detection on the encrypted image. Hence, the encryption-detection model is capable to perform the liveness detection while encrypting the to-be-detected image. After the to-be-detected image is obtained, the image feature of the to-be-detected image is extracted through the encryption network of the pre-trained encryption-detection model, and the encrypted image different from the original to-be-detected image is reconstructed based on the image feature, so that the content of the original to-be-detected image cannot be learned from the encrypted image. Afterwards, the liveness detection is performed on the encrypted image through the detection network of the encryption-detection model, and it is not necessary to analyze the original to-be-detected image, such that a risk of privacy loss due to divulgence of the to-be-detected image during the liveness detection can be reduced, and hence the user's privacy is protected. Moreover, the liveness detection is performed on the encrypted image through the detection network of the encryption-detection model, which can ensure the accuracy of the liveness detection.

Reference is made to Figure 2. In an embodiment, a method for face liveness detection is provided. It is taken as an example for illustration that the method is applied to the terminal 102 as shown in Figure 1. The method includes the following steps 202 to 206

In step 202, a to-be-detected image is obtained. The to-be-detected image includes a face of a to-be-detected object.

The to-be-detected image is an image on which liveness detection is to be performed, and includes a face of a to-be-detected object. The liveness detection refers to examining according to biometric features in an image whether the image includes a live entity and whether such operating entity is qualified. Generally, the liveness detection is configured to determine whether the image includes a live person, and is applied to identity authentication scenarios which require invulnerability against photo attacks. The to-be-detected image may be a facial image, and may be an image including a face, a gesture, or an expression.

Specifically, the terminal may collect an image in real time via a local image collector, and use the collected image as the to-be-detected image. For example, the terminal 102 as shown in the Figure 1 uses the facial image of the user collected via a camera. The to-be-detected image may alternatively be an image that is locally exported by the terminal. The locally exported image which serves as the to-be-detected image may be a photo that is captured or stored in advance. Generally, the locally exported image would fail the verification during the liveness detection.

In step 204, an image feature is extracted from the to-be-detected image through an encryption network of an encryption-detection model, and an encrypted image corresponding to the to-be-detected image is reconstructed based on the image feature.

Image content of the encrypted image differs from image content of the to-be-detected image. The encrypted image carries identification information for liveness detection.

In step 206, liveness detection is performed on the encrypted image through a detection network of the encryption-detection model to obtain a liveness detection result with respect to the to-be-detected object being in the to-be-detected image.

The encryption-detection model is a machine learning model has a capability of performing encryption and liveness detection on an image, and the capability is obtained through a computer device learning from multiple training samples. The computer device is for model training, and may be a terminal or a server. In this embodiment, the terminal serves as the training device to facilitate description. The encryption-detection model may be implemented as a neural network model, for example, a convolutional neural network model. In an embodiment, the terminal may configure a structure of a neural network model in advance, in order to obtain an initial neural network model. Then, the terminal trains the initial neural network model through sample images labeled with actual liveness categories (for example, being live or not being live), in order to obtain a parameter of the trained model (where specific steps of the training would be illustrated in following description). Thereby, when the liveness detection needs to be performed on the to-be-detected image, the terminal is capable to fetch the pre-obtained parameter of the trained model and import the parameter into the initial neural network model, so as to obtain the encryption-detection model.

Herein the encryption-detection model includes the encryption network and the detection network. Both the encryption network and the detection network may be implemented based on a convolutional neural network. The encryption network is configured to encrypt the original to-be-detected image to obtain the encrypted image corresponding to the to-be-detected image. The detection network is configured to perform the liveness detection on the encrypted image to obtain the liveness detection result with respect to the to-be-detected object being in the to-be-detected image. The detection result indicates either the to-be-detected image passing the liveness detection or the to-be-detected image failing the liveness detection. The to-be-detected image passing the liveness detection indicates that the object is live in the to-be-detected image. The to-be-detected image failing the liveness detection indicates that the object is not live in the to-be-detected image.

Structures of the neural networks in the encryption network and the detection network are not limited herein and may be configured on actual requirement, as long as the encryption network can implement encryption and the obtained encrypted image differs significantly from the original to-be-detected image, while the detection network can perform liveness detection on the encrypted image. In an embodiment, the encryption network includes an input layer, an encoding layer, a decoding layer, and an output layer. The to-be-detected image may be inputted into the encryption network through the input layer, the image feature is extracted from the to-be-detected image through the encoding layer, and the encrypted image corresponding to the to-be-detected image is reconstructed based on the image feature through the decoding layer. The encoding layer may include multiple convolutional layers, such that multiple convolutions are performed on the to-be-detected image to obtain the image feature. The decoding layer may include multiple deconvolutional layers, such that multiple deconvolutions are performed on the image feature to obtain the encrypted image. Due to the processing of the encryption network, the encrypted image serving as the output differs significantly from the original to-be-detected image serving as the input. Hence, a loss of user's privacy can be avoided during subsequent liveness detection on the encrypted image.

Generally, images are encrypted through a specific encryption algorithm (such as the hashing algorithm) when performing the image encryption. Distinguishability of the original image may be destroyed after the encryption algorithm is applied on such image, and hence the liveness detection cannot be directly performed on the encrypted image. For example, after the terminal encrypts the image through the algorithm and transmits the encrypted image to the server, the server needs to decrypt the encrypted image through a corresponding decryption means to obtain the original image before performing the liveness detection. In such case, the original image is still exposed during the liveness detection, raising privacy risks for the user. Contrarily, in embodiments of the present disclosure, the encryption network of the neural network encrypts the to-be-detected image to obtain the encrypted image which differs greatly from the original image, and hence the privacy information of the user is eliminated and not directly exposed to a server performing the liveness detection. The encrypted image carries identification information which is necessary for the liveness detection, such that the liveness detection server can perform the liveness detection directly on the encrypted image to obtain the liveness detection result.

User's privacy can be protected in practice.

In conventional technology, an image reconstructed based on the image feature of the original image usually differs little from the original image, such that the original image can be restored to the most extent. That is, it is preferred that the difference between the reconstructed image and the original image is minimized. Contrarily, in embodiments of the present disclosure, although the encrypted image outputted by the encryption network of the encryption-detection model is also reconstructed based on the image feature, the first loss is applied to the encryption network during the model training to maximize the difference between the inputted image and the encrypted image. Thereby, the encrypted image differs significantly from the original to-be-detected image in content or visual presentation, and hence is difficult to be recognized or cracked, which achieves protection of the user's privacy. At the same time, the encrypted image retains information necessary for liveness detection.

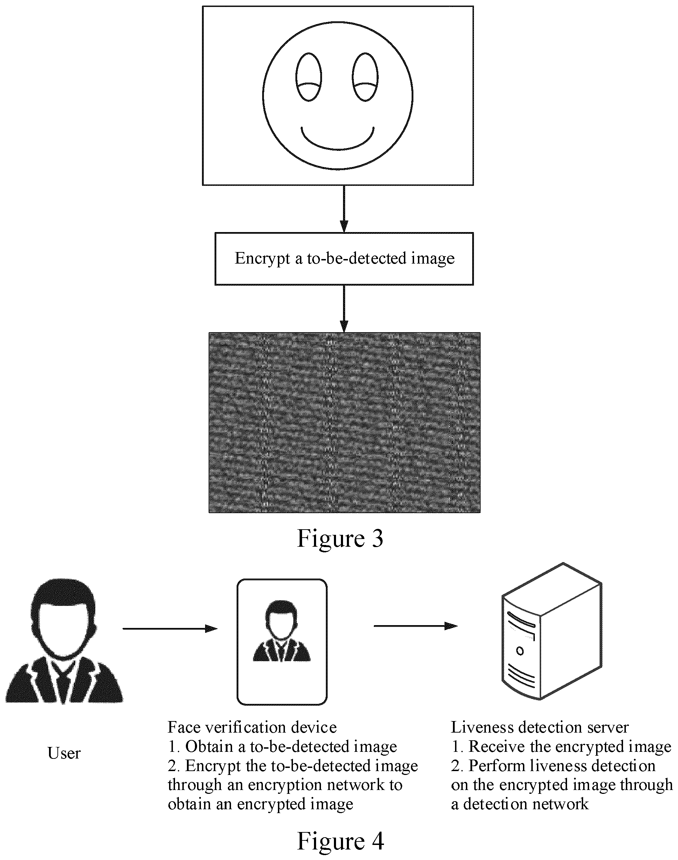

In some embodiments, the encrypted image may be a visual image file, such as an image file in the JPEG format. Alternatively, the encrypted image may be non-visual image data, such as a set of numerical values representing pixel values of all pixels. Figure 3 is a schematic diagram of encrypting a face image to obtain an encrypted image according to an embodiment of the present disclosure. As shown in Figure 3, the encrypted image after the encryption is completely visually different from the original face image, and content of the original face image cannot be learned from the encrypted image.

In some embodiments, the steps 204 and 206 may be executed by an independent terminal, for example, by an independent face verification device. Alternatively, the steps 204 and 206 may be performed by multiple computer devices, respectively. Figure 4 is a schematic architectural diagram of separate deployment of an encryption network and a detection network according to an embodiment of the present disclosure. As shown in Figure 4, a face verification device obtains the to-be-detected image concerning a user, encrypts the to-be-detected image through the encryption network of the trained encryption-detection model to obtain the encrypted image corresponding to the to-be-detected image, and transmits the encrypted image to the liveness detection server. The liveness detection server receives the encrypted image transmitted by the face verification device, and performs the liveness detection on the encrypted image through the detection network of the encryption-detection model to obtain the liveness detection result with respect to the to-be-detected object being in the to-be-detected image. The liveness detection server does not process the original to-be-detected image directly but analyzes the encrypted image. Hence, security of the to-be-detected image can be ensured during network transmission, and it is avoided that direct analysis of the liveness detection server on the to-be-detected image divulges the user's privacy.

The liveness detection result includes either the to-be-detected image passing the liveness detection or the to-be-detected image failing the liveness detection. A computer device may determine whether the to-be-detected object is live in the to-be-detected image according to the liveness detection result. In some application scenarios which require identity authentication, the to-be-detected image is a face image. A terminal determines that a current user passes the identity authentication, in a case that it determines that a face in the face image is live. Accordingly, the user is permitted to perform a corresponding operation, such as log into a current account or perform payment in the current account.

In the foregoing method for face liveness detection, the encryption network and the detection network of the encryption-detection model, which is based on a neural network, are obtained through joint training. The encryption network is capable to ensure a degree of difference between the to-be-detected image and the encrypted image, and the detection network is capable to ensure accuracy of the liveness detection on the encrypted image. Hence, the encryption-detection model is capable to perform the liveness detection while encrypting the to-be-detected image. After the to-be-detected image is obtained, the image feature of the to-be-detected image is extracted through the encryption network of the pre-trained encryption-detection model, and the encrypted image different from the original to-be-detected image is reconstructed based on the image feature, so that the content of the original to-be-detected image cannot be learned from the encrypted image. Afterwards, the liveness detection is performed on the encrypted image through the detection network of the encryption-detection model, and it is not necessary to analyze the original to-be-detected image, such that a risk of privacy loss due to divulgence of the to-be-detected image during the liveness detection can be reduced, and hence the user's privacy is protected. Moreover, the liveness detection is performed on the encrypted image through the detection network of the encryption-detection model, which can ensure the accuracy of the liveness detection.

In an embodiment, the foregoing method for face liveness detection further includes following steps of training a model before the step 202. Multiple training samples are obtained. A model parameter of an initial neural network model is adjusted by using the multiple training samples to obtain an encryption-detection model.

As mentioned above, the initial neural network model has a structure which is configured in advance. The model parameter of the initial neural network model can be treated as an initial model parameter. The initial model parameter is updated through continuous training, so as to obtain a parameter of a trained model. The parameter of the trained model can be imported into the initial neural network model to obtain the encryption-detection model, which is capable of encrypting images and performing the liveness detection.

Specifically, a terminal may obtain the multiple training samples, and adjust the model parameter of an initial neural network model by using the multiple training samples. Each training sample includes a sample image and an actual liveness category corresponding to the sample image. The actual liveness category is a label that represents an actual and accurate classification of liveness corresponding to the sample image. The liveness classification label includes either an object being live in the sample image or the object being not live in the sample image. During the model training, each sample image and its corresponding actual liveness category are inputted into the initial neural network model for processing, and the model parameter is adjusted according to a result of the processing, which is outputted by the current model. Then, a next sample image is subject to the processing based on the adjusted model parameter. The above process is repeated until the trained encryption-detection model is obtained.

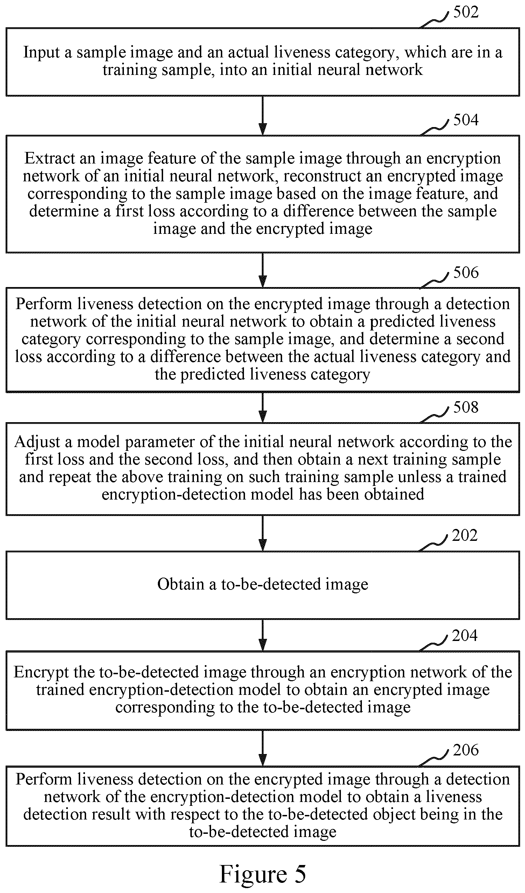

Reference is made to Figure 5. In an embodiment, the method for face liveness detection further includes steps of adjusting the model parameter of the initial neural network model by using the training samples to obtain the encryption-detection model. Such steps includes following steps 502 to 508.

In step 502, a sample image and an actual liveness category, which are in a training sample, are inputted into the initial neural network model.

In step 504, an image feature is extracted from the sample image through an encryption network of the initial neural network model, an encrypted image corresponding to the sample image is reconstructed based on the image feature, and a first loss is determined according to a difference between the sample image and the encrypted image.

In an embodiment, the terminal may calculate a squared-error loss between the sample image and the encrypted image as the first loss.

In an embodiment, the step 504 includes following sub-steps. An original value of each pixel in the sample image is obtained. A replacement value of each pixel in the encrypted image is obtained. The first loss is calculated according to a difference between the original value and the replacement value at each pixel location.

The encryption can be appreciated as a process of converting the original value of each pixel in the original to-be-detected image into a new value that serves as a replacement. The new value can be called the replacement value.

Specifically, the terminal may obtain the original value corresponding to each pixel in the sample image and the replacement value corresponding to each pixel in the encrypted image, and calculate the first loss according to the difference between the original value and the replacement value of each pair of identical pixels. Herein the "identical pixels" refers to pixels having identical pixel coordinates. For example, a pixel at (x,y) in the sample image and a pixel at (x,y) in the corresponding encrypted image are a pair of identical pixels. In a case that the original value of the pixel at (x,y) in the sample image is $m$, and the replacement value of the pixel at (x, y) in the encrypted image is $n$, the first loss $loss1$ may be expressed as

$$\sum_{(\mathrm{x},y)} \frac{1}{2} \left( m - n \right)^2 \quad .$$

In step 506, liveness detection is performed on the encrypted image through a detection network of the initial neural network model to obtain a predicted liveness category corresponding to the sample image, and a second loss is determined according to a difference between the actual liveness category and the predicted liveness category.

In an embodiment, the terminal may calculate a squared-error loss between the actual liveness category and the predicted liveness category of the sample image as the second loss.

The liveness categories of an image include "being live" and "being not live", and may be characterized by a probability $p$ of being live. When $p$ is greater than a preset threshold, it is determined that the object is live, and the category is recorded as 1. When $p$ is smaller than the preset threshold, it is determined that the object is not live, and the category is recorded as 0. The terminal may obtain the actual liveness category $s$ ($s = 0$ or 1) of the sample image and the predicted liveness category $p$ that is obtained through the detection network performing the liveness detection, and determines the second loss based on the difference between the actual liveness category s and the predicted liveness category $p$. The second loss loss2 may be expressed as

$$\frac{1}{2} \left( \mathrm{s} - p \right)^2 \quad .$$

In step 508, the model parameter of the initial neural network model is adjusted according to the first loss and the second loss. Then, a next training sample is obtained to continue training and subject to the above training, unless the trained encryption-detection model has been obtained.

The first loss is provided for adjusting the model to increase the difference between the sample image and the encrypted image, and the second loss is provided for adjusting the model to decrease the difference between the actual liveness category and the predicted liveness category. Thereby, it is ensured that the trained encryption-detection model obtained is capable of encrypting the to-be-detected image while performing accurate liveness detection on the to-be-detected image.

Specifically, the terminal may adjust the model parameter through a stochastic gradient descent algorithm after obtaining the first loss and the second loss, so as to increase the first loss while decreasing the second loss. After such adjustment is repeated for several times, the encryption-detection model capable to differentiate the original to-be-detected image and the encrypted image and perform accurate liveness detection can be obtained.

In an embodiment, the step of adjusting the model parameter of the initial neural network model according to the first loss and the second loss includes following sub-steps. A target loss is constructed based on the first loss and the second loss. The model parameter is adjusted based on the target loss, such that the difference between the encrypted image outputted by the encryption network and the original sample image increases after the adjustment while the difference between the predicted liveness category outputted by the detection network and the actual liveness category decreases after the adjustment.

Specifically, the terminal may update the model parameter by minimizing the target loss. In such case, the constructed target loss is in negative correlation with the first loss and in positive correlation with the second loss. For example, the target loss is equal to the second loss minus the first loss.

Alternatively, the terminal may update the model parameter by maximizing the target loss. In such case, the constructed target loss in positive correlation with the first loss and in negative correlation with the second loss. For example, the target loss is equal to the first loss minus the second loss.

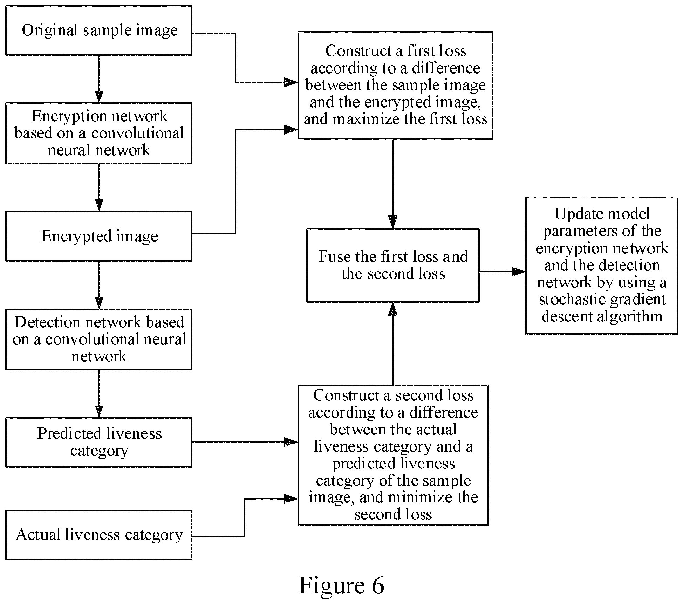

Figure 6 is a framework diagram of training a model that combines an encryption network and a detection network according to an embodiment of the present disclosure. As shown in Figure 6, an encryption network implemented based on a convolutional neural network encrypts an original sample image and outputs an encrypted image corresponding to the sample image. Then, a first loss is constructed according to a difference between the sample image and the encrypted image, and a target of the training is to maximize the first loss, such that the difference between the original sample image and the corresponding encrypted image grows. Moreover, the obtained encrypted image is inputted into a detection network implemented based on a convolutional neural network, and is subjected to liveness detection through the detection network, so as to output a predicted liveness category corresponding to the sample image. Then, a second loss is constructed according to a difference between an actual liveness category and the predicted liveness category of the sample image, and another target of the training is to minimize the second loss, in order to ensure the accuracy of liveness detection. Finally, the first loss and the second loss are fused, and model parameters of the encryption network and the detection network are updated through a stochastic gradient descent algorithm until obtaining the encryption-detection model that performs encryption and detection jointly. The encryption-detection model both encrypts the image and performs the liveness detection, which not only prevents divulgence of the image content but also implements the liveness detection.

In this embodiment, the initial neural network model is designed to include the encryption network and the detection network. The encryption network and the detection network are jointly trained to obtain the encryption-detection model capable of both encrypting an image and performing liveness detection on the encrypted image. Therefore, not only divulgence of the image content is prevented, but also the liveness detection is implemented.

In an embodiment, the foregoing method for face liveness detection further includes a following step. Data augmentation is performed on the encrypted image to obtain multiple expanded images.

The step of performing the liveness detection on the encrypted image through the detection network of the encryption-detection model to obtain the liveness detection result with respect to the to-be-detected object being in the to-be-detected image include following substeps. The liveness detection is performed on each of the expanded images through the detection network of the encryption-detection model to obtain a liveness detection result corresponding to each of the expanded images. The liveness detection result with respect to the to-be-detected object being in the to-be-detected image is determined according to the liveness detection result corresponding to each of the expanded images.

The data augmentation performed on the encrypted image may be at least one of: Gaussian noise processing, random flipping, random cropping, and random occlusion. Multiple expanded images may be obtained through performing the data augmentation on the encrypted image. That is, the multiple expanded images may be obtained based on the single to-be-detected image, and then each expanded image is subjected to the liveness detection to obtain detection results. Finally, the detection results may vote, according to a preset voting rule, whether the to-be-detected object is live in the to-be-detected image. Thereby, accuracy of liveness detection is improved.

In an embodiment, the terminal may transmit the encrypted image to the liveness detection server. The liveness detection server receives the encrypted image and performs the data augmentation on the encrypted image to obtain the multiple expanded images, and performs the liveness detection on each expanded image through the detection network of the encryption-detection model, so as to obtain the liveness detection result corresponding to each expanded image. In such case, the terminal is not necessary to generate a large quantity of to-be-detected images and transmit these to-be-detected images to the liveness detection server for performing the liveness detection, and hence a delay due to the network transmission is reduced, improving user's experience.

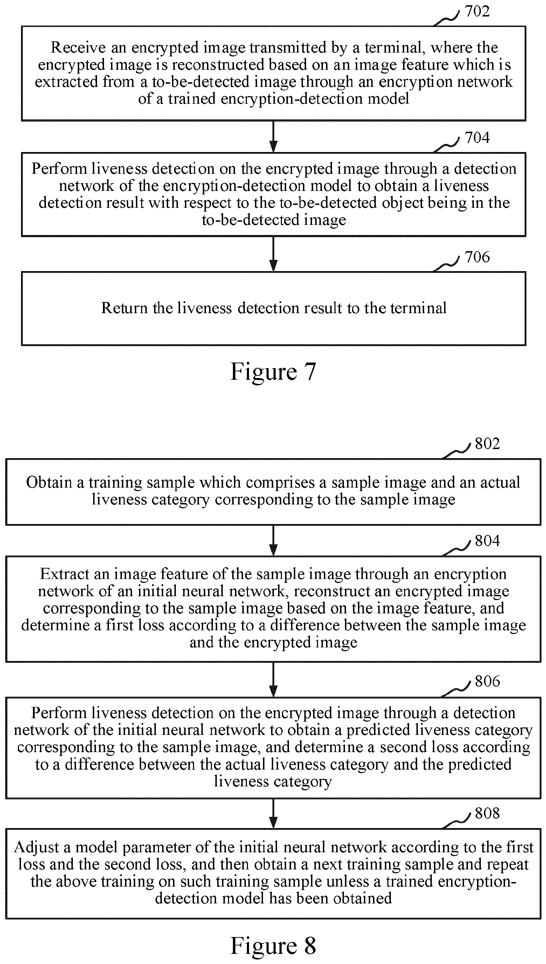

Reference is made to Figure 7. In an embodiment, a method for face liveness detection is provided. It is taken as an example for illustration that the method is applied to the liveness detection server 104 as shown in Figure 1. The method includes following steps S702 to S704.

In step 702, an encrypted image transmitted by a terminal is received. The encrypted image is reconstructed based on an image feature which is extracted from a to-be-detected image by the terminal through an encryption network of an encryption-detection model.

The to-be-detected image is an image on which liveness detection is to be performed, and includes a face of a to-be-detected object. The liveness detection refers to examining according to biometric features in an image whether the image includes a live entity and whether such operating entity is qualified. Generally, the liveness detection is configured to determine whether the image includes a live person, and is applied to identity authentication scenarios which require invulnerability against photo attacks. The to-be-detected image may be a facial image, and may be an image including a face, a gesture, or an expression.

Specifically, the terminal may collect an image in real time via a local image collector, and use the collected image as the to-be-detected image. For example, the terminal 102 as shown in the Figure 1 uses the facial image of the user collected via a camera. The to-be-detected image may alternatively be an image that is locally exported by the terminal. The locally exported image which serves as the to-be-detected image may be a photo that is captured or stored in advance. Generally, the locally exported image would fail the verification during the liveness detection.

The encryption-detection model is a machine learning model has a capability of performing encryption and liveness detection on an image, and the capability is obtained through a computer device learning from multiple training samples. The computer device is for model training, and may be a terminal or a server. In this embodiment, the terminal serves as the training device to facilitate description. The encryption-detection model may be implemented as a neural network model, for example, a convolutional neural network model. In an embodiment, the terminal may configure a structure of a neural network model in advance, in order to obtain an initial neural network model. Then, the terminal trains the initial neural network model through sample images labeled with actual liveness categories (for example, being live or not being live), in order to obtain a parameter of the trained model (where specific steps of the training would be illustrated in following description). Thereby, when the liveness detection needs to be performed on the to-be-detected image, the terminal is capable to fetch the pre-obtained parameter of the trained model and import the parameter into the initial neural network model, so as to obtain the encryption-detection model.

Herein the encryption-detection model includes the encryption network and the detection network. Both the encryption network and the detection network may be implemented based on a convolutional neural network. The encryption network is configured to encrypt the original to-be-detected image to obtain the encrypted image corresponding to the to-be-detected image. The detection network is configured to perform the liveness detection on the encrypted image to obtain the liveness detection result with respect to the to-be-detected object being in the to-be-detected image. The detection result indicates either the to-be-detected image passing the liveness detection or the to-be-detected image failing the liveness detection. The to-be-detected image passing the liveness detection indicates that the object is live in the to-be-detected image. The to-be-detected image failing the liveness detection indicates that the object is not live in the to-be-detected image.

The terminal may extract the image feature from the to-be-detected image through the encryption network of the encryption-detection model, reconstruct the encrypted image corresponding to the to-be-detected image based on the image feature, and transmit the encrypted image to the liveness detection server. The liveness detection server receives the encrypted image. The encrypted image and the to-be-detected image are different in image content. The encrypted image carries information for identification in the liveness detection.

In some embodiments, the encrypted image may be a visual image file, such as an image file in the JPEG format. Alternatively, the encrypted image may be non-visual image data, such as a set of numerical values representing pixel values of all pixels.

In step 704, liveness detection is performed on the encrypted image through a detection network of the encryption-detection model to obtain a liveness detection result with respect to the to-be-detected object being in the to-be-detected image.

In step 706, the liveness detection result is returned to the terminal.

The liveness detection result includes either the to-be-detected image passing the liveness detection or the to-be-detected image failing the liveness detection. After receiving the encrypted image transmitted by the terminal, the liveness detection server performs the liveness detection on the encrypted image through the detection network of the encryption-detection model, and returns the obtained liveness detection result with respect to the to-be-detected object being in the to-be-detected image to the terminal.

In some application scenarios which require identity authentication, the liveness detection server determines that a current user passes the identity authentication in a case that it determines that the to-be-detected object is live in the to-be-detected image. Accordingly, the user is permitted to perform a corresponding operation, such as log into a current account or perform payment in the current account.

In an embodiment, the liveness detection server may further perform data augmentation on an encrypted image to obtain multiple extended images, perform the liveness detection on each expanded image through the detection network of the encryption-detection model to obtain a liveness detection result corresponding to each expanded image, and determine the liveness detection result with respect to-be-detected object being in the to-be-detected image according to the detection result corresponding to each expanded image. In such case, the terminal is not necessary to generate a large quantity of to-be-detected images and transmit these to-be-detected images to the liveness detection server for performing the liveness detection, and hence a delay due to the network transmission is reduced, improving user's experience.

In the foregoing method for face liveness detection, the encryption network and the detection network of the encryption-detection model, which is based on a neural network, are obtained through joint training. The encryption network is capable to ensure a degree of difference between the to-be-detected image and the encrypted image, and the detection network is capable to ensure accuracy of the liveness detection on the encrypted image. Hence, the encryption-detection model is capable to perform the liveness detection while encrypting the to-be-detected image. After the to-be-detected image is obtained, the image feature of the to-be-detected image is extracted through the encryption network of the pre-trained encryption-detection model, and the encrypted image different from the original to-be-detected image is reconstructed based on the image feature, so that the content of the original to-be-detected image cannot be learned from the encrypted image. Afterwards, the liveness detection is performed on the encrypted image through the detection network of the encryption-detection model, and it is not necessary to analyze the original to-be-detected image, such that a risk of privacy loss due to divulgence of the to-be-detected image during the liveness detection can be reduced, and hence the user's privacy is protected. Moreover, the liveness detection is performed on the encrypted image through the detection network of the encryption-detection model, which can ensure the accuracy of the liveness detection.

Reference is made to Figure 8. In an embodiment, a method for training a model is provided. It is taken as an example that the method is applied to a computer device. The method includes following steps 802 to 808.

In step 802, a training sample is obtained. The training sample includes a sample image and an actual liveness category corresponding to the sample image.

Specifically, the computer device may configure a structure of a neural network model in advance, so as to obtain an initial neural network model. The computer device may obtain the multiple training samples and adjust a model parameter of the initial neural network model by using the multiple training samples. The model parameter of the initial neural network model may be appreciated as an initial model parameter. The initial model parameter is updated through continuous training to obtain a parameter of a trained model.

Each training sample in the multiple training samples obtained by the computer device includes the sample image and the actual liveness category corresponding to the sample image. The actual liveness category is a label that represents an actual and accurate classification of liveness corresponding to the sample image. The liveness classification label includes either an object being live in the sample image or the object being not live in the sample image. During the model training, each sample image and its corresponding actual liveness category are inputted into the initial neural network model for processing,

In step 804, an image feature is extracted from the sample image through an encryption network of the initial neural network model, an encrypted image corresponding to the sample image is reconstructed based on the image feature, and a first loss is determined according to a difference between the sample image and the encrypted image.

In an embodiment, the computer device may calculate a squared-error loss between the sample image and the encrypted image as the first loss.

In an embodiment, the step 804 includes following sub-steps. An original value of each pixel in the sample image is obtained. A replacement value of each pixel in the encrypted image is obtained. The first loss is calculated according to a difference between the original value and the replacement value at each pixel location.

The encryption can be appreciated as a process of converting the original value of each pixel in the original to-be-detected image into a new value that serves as a replacement. The new value can be called the replacement value.

Specifically, the computer device may obtain the original value corresponding to each pixel in the sample image and the replacement value corresponding to each pixel in the encrypted image, and calculate the first loss according to the difference between the original value and the replacement value of each pair of identical pixels. Herein the "identical pixels" refers to pixels having identical pixel coordinates. For example, a pixel at (x,y) in the sample image and a pixel at (x,y) in the corresponding encrypted image are a pair of identical pixels. In a case that the original value of the pixel at (x,y) in the sample image is m, and the replacement value of the pixel at (x,y) in the encrypted image is $n$, the first loss loss1 may be expressed as

$$\sum_{(x,y)} \frac{1}{2} (m - n)^2 .$$

In step 806, liveness detection is performed on the encrypted image through a detection network of the initial neural network model to obtain a predicted liveness category corresponding to the sample image, and a second loss is determined according to a difference between the actual liveness category and the predicted liveness category.

In an embodiment, the computer device may calculate a squared-error loss between the actual liveness category and the predicted liveness category of the sample image as the second loss.

The liveness categories of an image include "being live" and "being not live", and may be characterized by a probability $p$ of being live. When $p$ is greater than a preset threshold, it is determined that the object is live, and the category is recorded as 1. When $p$ is smaller than the preset threshold, it is determined that the object is not live, and the category is recorded as 0. The computer device may obtain the actual liveness category $s$ ($s$ = 0 or 1) of the sample image and the predicted liveness category $p$ that is obtained through the detection network performing the liveness detection, and determines the second loss based on the difference between the actual liveness category s and the predicted liveness category $p$. The second loss loss2 may be expressed as

$$\frac{1}{2} (s - p)^2 .$$

In step 808, the model parameter of the initial neural network model is adjusted according to the first loss and the second loss. Then, a next training sample is obtained and subject to the above training, unless the trained encryption-detection model has been obtained.

The first loss is provided for adjusting the model to increase the difference between the sample image and the encrypted image, and the second loss is provided for adjusting the model to decrease the difference between the actual liveness category and the predicted liveness category. Thereby, it is ensured that the trained encryption-detection model obtained is capable of encrypting the to-be-detected image while performing accurate liveness detection on the to-be-detected image.

Specifically, the computer device may adjust the model parameter through a stochastic gradient descent algorithm after obtaining the first loss and the second loss, so as to increase the first loss while decreasing the second loss. After such adjustment is repeated for several times, the encryption-detection model capable to differentiate the original to-be-detected image and the encrypted image and perform accurate liveness detection can be obtained.

In an embodiment, the step of adjusting the model parameter of the initial neural network model according to the first loss and the second loss includes following sub-steps. A target loss is constructed based on the first loss and the second loss. The model parameter is adjusted based on the target loss, such that the difference between the encrypted image outputted by the encryption network and the original sample image increases after the adjustment while the difference between the predicted liveness category outputted by the detection network and the actual liveness category decreases after the adjustment.

Specifically, the computer device may update the model parameter by minimizing the target loss. In such case, the constructed target loss is in negative correlation with the first loss and in positive correlation with the second loss. For example, the target loss is equal to the second loss minus the first loss.

Alternatively, the computer device may update the model parameter by maximizing the target loss. In such case, the constructed target loss in positive correlation with the first loss and in negative correlation with the second loss. For example, the target loss is equal to the first loss minus the second loss.

In the foregoing method for training the model, the encryption network and the detection network of the encryption-detection model, which is based on a neural network, are obtained through joint training. The encryption network is capable to ensure a degree of difference between the to-be-detected image and the encrypted image, and the detection network is capable to ensure accuracy of the liveness detection on the encrypted image. Hence, the encryption-detection model is capable to perform the liveness detection while encrypting the to-be-detected image.

Reference is made to Figure 1. In an embodiment, a system for face liveness detection is provided, including a terminal 102 and a liveness detection server 104.

The terminal 102 is configured to obtain a to-be-detected image, extract an image feature from the to-be-detected image through an encryption network of an encryption-detection model, and reconstruct an encrypted image corresponding to the to-be-detected image based on the image feature.

The terminal 102 is further configured to transmit the encrypted image to the liveness detection server.

The liveness detection server 104 is configured to receive the encrypted image and perform liveness detection on the encrypted image through a detection network of the encryption-detection model to obtain a liveness detection result with respect to the to-be-detected object being in the to-be-detected image.

The liveness detection server 104 is further configured to return the liveness detection result to the terminal.

In an embodiment, the liveness detection server 104 is further configured to perform data augmentation on an encrypted image to obtain multiple expanded image, perform the liveness detection on each expanded image through the detection network of an encryption-detection model to obtain a liveness detection result corresponding to each expanded image, and determine the liveness detection result with respect to the to-be-detected object being in the to-be-detected image according to the liveness detection result corresponding to each expanded image.

In the foregoing system for face liveness detection, the encryption network and the detection network of the encryption-detection model, which is based on a neural network, are obtained through joint training. The encryption network is capable to ensure a degree of difference between the to-be-detected image and the encrypted image, and the detection network is capable to ensure accuracy of the liveness detection on the encrypted image. Hence, the encryption-detection model is capable to perform the liveness detection while encrypting the to-be-detected image. After obtaining the to-be-detected image, the terminal extracts the image feature of the to-be-detected image through the encryption network of the pre-trained encryption-detection model, and reconstructs the encrypted image different from the original to-be-detected image based on the image feature, so that the content of the original to-be-detected image cannot be learned from the encrypted image. Afterwards, the liveness detection server receives the encrypted image transmitted by the terminal, performs the liveness detection on the encrypted image through the detection network of the encryption-detection model, and is not necessary to analyze the original to-be-detected image, such that a risk of privacy loss due to divulgence of the to-be-detected image during the liveness detection can be reduced, and hence the user's privacy is protected. Moreover, the liveness detection is performed on the encrypted image through the detection network of the encryption-detection model, which can ensure the accuracy of the liveness detection.

Although steps in the flowcharts of Figures 2, 6, 7, and 8 are illustrated in a sequence indicated by arrows, it is not necessary to execute these steps according to the indicated sequence. Unless clearly specified in this specification, there is no strict limitation on a sequence of executing these steps, and the steps may be performed in another sequence. In addition, at least one step in Figures 2, 6, 7, and 8 may include multiple sub-steps or multiple stages. It is not necessary to execute the sub-steps or the stages simultaneously. Rather, their execution may differ in time. Moreover, it is not necessary to execute the sub-steps or the stages sequentially. Rather, they may be executed in turn or alternately along with at least one sub-step or stage of another step.

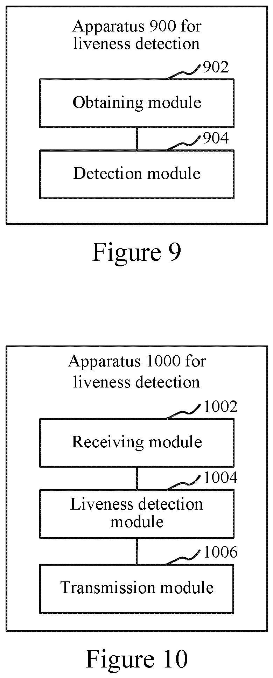

Reference is made to Figure 9. In an embodiment, an apparatus for face liveness detection 900 is provided. The apparatus may include a software module, a hardware module, or a combination of the two, and serve as a part of a terminal. Specifically, the apparatus includes an obtaining module 902 and a detection module 904.

The obtaining module 902 is configured to obtain a to-be-detected image.

The detection module 904 is configured to extract an image feature from the to-be-detected image through an encryption network of an encryption-detection model, reconstruct an encrypted image corresponding to the to-be-detected image based on the image feature, and perform liveness detection on the encrypted image through a detection network of the encryption-detection model to obtain a liveness detection result with respect to a to-be-detected object being in the to-be-detected image.

In an embodiment, the apparatus 900 for face liveness detection further includes a transmission module. The transmission module is configured to transmit the encrypted image to a liveness detection server. Thereby, the liveness detection server receives the encrypted image, and then performs liveness detection on the encrypted image through the detection network of the encryption-detection model to obtain the liveness detection result with respect to the to-be-detected object being in the to-be-detected image.

In an embodiment, the apparatus 900 for face liveness detection further includes a model training module. The module training module is configured to obtain multiple training samples, and adjust a model parameter of an initial neural network model by using the multiple training samples to obtain the encryption-detection model.

In an embodiment, the model training module is further configured to: obtain a training sample, where the training sample includes a sample image and an actual liveness category corresponding to the sample image; extract an image feature from the sample image through an encryption network of the initial neural network model; reconstruct an encrypted image corresponding to the sample image based on the image feature; determine a first loss according to a difference between the sample image and the encrypted image; perform the liveness detection on the encrypted image through a detection network of the initial neural network model to obtain a predicted liveness category corresponding to the sample image; determine a second loss according to a difference between the actual liveness category and the predicted liveness category; and adjust the model parameter of the initial neural network model according to the first loss and the second loss, and then obtain a next training sample and repeat the above training on such training sample unless the trained encryption-detection model is obtained.

In an embodiment, the model training module is further configured to obtain an original value corresponding to each pixel in the sample image, obtain a replacement value corresponding to each pixel in the encrypted image, and calculate the first loss according to a difference between the original value and the replacement value at each pixel location.

In an embodiment, the model training module is further configured to construct a target loss based on the first loss and the second loss, and adjust the model parameter according to the target loss, such that the difference between the encrypted image outputted by the encryption network and the original sample image increases after the adjustment, and the difference between the predicted liveness category outputted by the detection network and the actual liveness category decreases after the adjustment.

In an embodiment, the foregoing apparatus 900 for face liveness detection further includes a data augmentation module, configured to perform data augmentation on the encrypted image to obtain multiple expanded images. The foregoing detection module 904 is further configured to perform the liveness detection on each of the expanded images through the detection network of the encryption-detection model to obtain a liveness detection result corresponding to each of the expanded images, and determine the liveness detection result with respect to the to-be-detected object being in the to-be-detected image according to the liveness detection result corresponding to each of the expanded images.

Reference is made to Figure 10. In an embodiment, an apparatus 1000 for face liveness detection is provided. The apparatus may include a software module, a hardware module, or a combination of the two, and serve as a part of a terminal. Specifically, the apparatus includes a receiving module 1002, a liveness detection module 1004, and a transmission module 1006.

The receiving module 1002 is configured to receive an encrypted image transmitted by a terminal. The encrypted image is reconstructed based on an image feature which is extracted from a to-be-detected image by the terminal through an encryption network of a trained encryption-detection model.

The liveness detection module 1004 is configured to perform liveness detection on the encrypted image through a detection network of the encryption-detection model to obtain a liveness detection result with respect to the to-be-detected object being in the to-be-detected image.

The transmission module 1006 is configured to return the liveness detection result to the terminal.

In the foregoing apparatuses for face liveness detection, the encryption network and the detection network of the encryption-detection model, which is based on a neural network, are obtained through joint training. The encryption network is capable to ensure a degree of difference between the to-be-detected image and the encrypted image, and the detection network is capable to ensure accuracy of the liveness detection on the encrypted image. Hence, the encryption-detection model is capable to perform the liveness detection while encrypting the to-be-detected image. After the to-be-detected image is obtained, the image feature of the to-be-detected image is extracted through the encryption network of the pre-trained encryption-detection model, and the encrypted image different from the original to-be-detected image is reconstructed based on the image feature, so that the content of the original to-be-detected image cannot be learned from the encrypted image. Afterwards, the liveness detection is performed on the encrypted image through the detection network of the encryption-detection model, and it is not necessary to analyze the original to-be-detected image, such that a risk of privacy loss due to divulgence of the to-be-detected image during the liveness detection can be reduced, and hence the user's privacy is protected. Moreover, the liveness detection is performed on the encrypted image through the detection network of the encryption-detection model, which can ensure the accuracy of the liveness detection.

Specific limitations on the apparatuses for face liveness detection may refer to those on the methods in the foregoing description, and are not repeated herein. Each module in the foregoing apparatuses for face liveness detection may be wholly or partially implemented through software, hardware, or a combination of the two. The foregoing modules may be hardware built in, or independent from, a processor of a computer device, or may be software stored in a memory of the computer device, so as to facilitate the processor invoking the foregoing modules to perform corresponding operations.

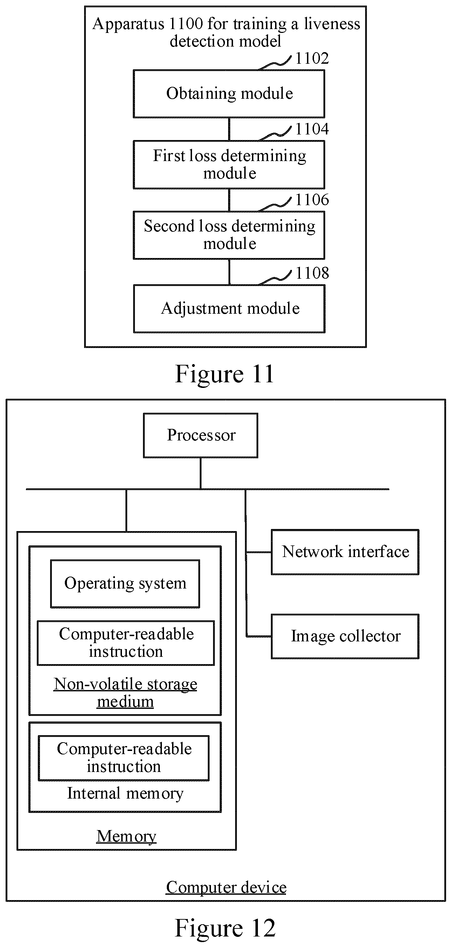

Reference is made to Figure 11. In an embodiment, an apparatus 1100 for training a model is provided. The apparatus may be a software module or a hardware module, or a combination thereof to form a part of a computer device. The apparatus specifically includes: an obtaining module 1102, a first loss determining module 1104, a second loss determining module 1106, and an adjustment module 1108.

The obtaining module 1102 is configured to obtain a training sample. The training sample includes a sample image and an actual liveness category corresponding to the sample image.

The first loss determining module 1104 is configured to extract an image feature from the sample image through an encryption network of an initial neural network model, reconstruct an encrypted image corresponding to the sample image based on the image feature, and determine a first loss according to a difference between the sample image and the encrypted image.

The second loss determining module 1106 is configured to perform liveness detection on the encrypted image through a detection network of the initial neural network model to obtain a predicted liveness category corresponding to the sample image, and determine a second loss according to a difference between the actual liveness category and the predicted liveness category.

The adjustment module 1108 is configured to adjust a model parameter of the initial neural network model according to the first loss and the second loss, and then obtain a next training sample and repeat the above training on such training sample unless a trained encryption-detection model has been obtained.

In the foregoing apparatus for training the model, the encryption network and the detection network of the encryption-detection model, which is based on a neural network, are obtained through joint training. The encryption network is capable to ensure a degree of difference between the to-be-detected image and the encrypted image, and the detection network is capable to ensure accuracy of the liveness detection on the encrypted image. Hence, the encryption-detection model is capable to perform the liveness detection while encrypting the to-be-detected image.

Specific limitations on the apparatus for training the model may refer to those on the method for training the model in the foregoing description, and are not repeated herein. Each module in the foregoing apparatuses for training the module may be wholly or partially implemented through software, hardware, or a combination of the two. The foregoing modules may be hardware built in, or independent from, a processor of a computer device, or may be software stored in a memory of the computer device, so as to facilitate the processor invoking the foregoing modules to perform corresponding operations.

In one embodiment, a computer device is provided. The computer device may be a terminal or a liveness detection server, and an internal structural diagram thereof may be as shown in Figure 12. The computer may further include an image collector, such as a camera, when being the terminal. The computer device includes a processor, a memory, and a network interface that are connected via a system bus. The processor of the computer device is configured to provide computing and control capabilities. The memory of the computer device includes a non-volatile storage medium and an internal memory. The non-volatile storage medium stores an operating system and computer-readable instructions. The internal memory provides an environment for running the operating system and the computer-readable instructions in the non-volatile storage medium. The network interface of the computer device is configured to connect and communicate with another computer device via a network. The computer-readable instructions when executed by the processor implements the foregoing method for face liveness detection and/or the foregoing method for training the model.

The structure as shown in Figure 12 is merely block diagrams of some structures related to the present disclosure, and do not constitute a limitation on the computer devices to which the present disclosure is applicable. A specific example of such computer devices may include components more or less than those as shown in Figure 12, some components as shown may be combined, or the components as shown may have different arrangement.

In one embodiment, a computer device is further provided. The computer device includes a memory and a processor. The memory stores computer-readable instructions, and the computer-readable instructions when executed by the processor implement the steps in the foregoing method embodiments.

In one embodiment, a computer-readable storage medium is provided. The computer-readable storage medium stores computer-readable instructions, and the computer-readable instructions when executed by a processor implement the steps in the foregoing method embodiments.

In an embodiment, a computer program product or a computer program is provided. The computer program product or the computer program includes computer instructions. The computer instructions are stored in a computer-readable storage medium. A processor of a computer device reads the computer instruction from the computer-readable storage medium, and executes the computer instructions, so as to configure the computer device to perform the steps in the foregoing method embodiments.

Those skilled in the art may understand that all or some of procedures of the method in the foregoing embodiments may be implemented by a computer program instructing relevant hardware. The program may be stored in a non-volatile computer-readable storage medium. The procedures of the foregoing method embodiments may be implemented when the program is executed. All references to the memory, the storage, the database, or other medium used in embodiments of the present disclosure may include a non-volatile and/or a volatile memory. The non-volatile memory may include a read-only memory (ROM), a cassette, a floppy disk, a flash memory, and an optical storage. The volatile memory may include a random access memory (RAM) or an external cache. By way of description rather than limitation, the RAM may be implemented in various forms, such as a static RAM (SRAM) and a dynamic RAM (DRAM).

Technical features of the foregoing embodiments may be combined. In order to make description concise, not all possible combinations of the technical features in the foregoing embodiments are described. The combinations of these technical features shall be considered as falling within the scope covered by this specification as long as there is no conflict.

## Claims

1. A method for face liveness detection, executable by a computer device, wherein the method comprises:

   obtaining (202) a to-be-detected image, wherein the to-be-detected image comprises a face of a to-be-detected object;
   extracting (204) an image feature from the to-be-detected image through an encryption network of an encryption-detection model;
   reconstructing (204) an encrypted image corresponding to the to-be-detected image based on the image feature, wherein the encrypted image and the to-be-detected image have different image content; and
   performing (206) liveness detection on the encrypted image through a detection network of the encryption-detection model to obtain a liveness detection result with respect to the to-be-detected object being in the to-be-detected image, wherein the encryption-detection model is obtained by:

      obtaining a plurality of training samples, wherein each training sample of the plurality of training samples comprises a sample image and an actual liveness category corresponding to the sample image;
   inputting (502) the sample image and the actual liveness category in a training sample of the plurality of training samples into an initial neural network model;
   extracting (504) an image feature from the sample image through the encryption network of the initial neural network model;
   reconstructing (504) an encrypted image corresponding to the sample image based on the image feature;
   determining (504) a first loss according to a difference between the sample image and the encrypted image;
   performing (506) the liveness detection on the encrypted image through the detection network of the initial neural network model to obtain a predicted liveness category corresponding to the sample image;
   determining (506) a second loss according to a difference between the actual liveness category and the predicted liveness category; and
   adjusting (508) the model parameter of the initial neural network model according to the first loss and the second loss;
   wherein after adjusting (508) the model parameter of the initial neural network model according to the first loss and the second loss, the method further comprises:
   obtaining (508) a next training sample of the plurality of training samples as the training sample, and returning to the step of inputting the sample image and the actual liveness category in the training sample into the initial neural network model, unless the trained encryption-detection model has been obtained.

2. The method according to claim 1, further comprising:

   transmitting the encrypted image to a liveness detection server;
   wherein the liveness detection server receives the encrypted image, and performs the liveness detection on the encrypted image through the detection network of the encryption-detection model to obtain the liveness detection result.

3. The method according to claim 1, wherein determining the first loss according to the difference between the sample image and the encrypted image comprises:

   obtaining an original value corresponding to each pixel in the sample image;

obtaining a replacement value corresponding to each pixel in the encrypted image; and calculating the first loss according to a difference between the original value and the replacement value of each pixel location.

4. The method according to claim 1 or 3, wherein adjusting the model parameter of the initial neural network model according to the first loss and the second loss comprises:

   constructing a target loss based on the first loss and the second loss; and
   adjusting the model parameter according to the target loss, such that the difference between the encrypted image outputted by the encryption network and the original sample image increases after the adjusting and the difference between the predicted liveness category outputted by the detection network and the actual liveness category decreases after the adjusting.

5. The method according to any one of claims 1 to 4, wherein obtaining the to-be-detected image comprises:

   obtaining a face image for identity authentication; and
   the method further comprises:
   determining that the face image passes the identity authentication, in a case that the liveness detection result indicates that a face in the face image is live.

6. The method according to any one of claims 1 to 5, further comprising:

   performing data augmentation on the encrypted image to obtain a plurality of expanded images; and
   performing the liveness detection on the encrypted image through the detection network of the encryption-detection model to obtain the liveness detection result with respect to the to-be-detected object being in the to-be-detected image comprises:

   performing the liveness detection on each expanded image in the plurality of expanded images through the detection network of the encryption-detection model to obtain a detection result corresponding to each expanded image; and
   determining the liveness detection result with respect to the to-be-detected object being in the to-be-detected image according to the liveness detection result corresponding to each expanded image.

7. A method for face liveness detection, executable by a computer device, wherein the method comprises:

   receiving (702) an encrypted image transmitted by a terminal, wherein the encrypted image is reconstructed based on an image feature which is extracted from a to-be-detected image by the terminal through an encryption network of an encryption-detection model, the encrypted image and the to-be-detected image have different image content, and the to-be-detected image comprises a face of a to-be-detected object;
   performing (704) liveness detection on the encrypted image through a detection network of the encryption-detection model to obtain a liveness detection result with respect to the to-be-detected object being in the to-be-detected image; and
   returning (706) the liveness detection result to the terminal;

   wherein the encryption-detection model is obtained by:

   obtaining a plurality of training samples, wherein each training sample of the plurality of training samples comprises a sample image and an actual liveness category corresponding to the sample image;
   inputting (502) the sample image and the actual liveness category in a training sample of the plurality of training samples into an initial neural network model;
   extracting (504) an image feature from the sample image through the encryption network of the initial neural network model;
   reconstructing (504) an encrypted image corresponding to the sample image based on the image feature;
   determining (504) a first loss according to a difference between the sample image and the encrypted image;
   performing (506) the liveness detection on the encrypted image through the detection network of the initial neural network model to obtain a predicted liveness category corresponding to the sample image;
   determining (506) a second loss according to a difference between the actual liveness category and the predicted liveness category; and
   adjusting (508) the model parameter of the initial neural network model according to the first loss and the second loss;
   wherein after adjusting (508) the model parameter of the initial neural network model according to the first loss and the second loss, the method further comprises:
   obtaining (508) a next training sample of the plurality of training samples as the training sample, and returning to the step of inputting the sample image and the actual liveness category in the training sample into the initial neural network model, unless the trained encryption-detection model has been obtained.

8. A method for training a model, executable by a computer device, wherein the method comprises:

    obtaining (802) a training sample, wherein the training sample comprises a sample image and an actual liveness category corresponding to the sample image;

    extracting (804) an image feature from the sample image through an encryption network of an initial neural network model;

    reconstructing (804) an encrypted image corresponding to the sample image based on the image feature;

    determining (804) a first loss according to a difference between the sample image and the encrypted image;

    performing (806) liveness detection on the encrypted image through a detection network of the initial neural network model to obtain a predicted liveness category corresponding to the sample image;

    determining (806) a second loss according to a difference between the actual liveness category and the predicted liveness category; and

    adjusting (808) a model parameter of the initial neural network model according to the first loss and the second loss;

    wherein after adjusting the model parameter of the initial neural network model according to the first loss and the second loss, the method further comprises:

    obtaining (808) a next training sample as the training sample, and repeating the steps from extracting an image feature from the sample image to adjusting the model parameter of the initial neural network model according to the first loss and the second loss, unless a trained encryption-detection model has been obtained.

9. A system for face liveness detection, comprising a terminal (102) and a liveness detection server, (104), wherein

    the terminal (102) is configured to obtain a to-be-detected image, wherein the to-be-detected image comprises a face of a to-be-detected object;

    the terminal (102) is further configured to extract an image feature from the to-be-detected image through an encryption network of an encryption-detection model trained according to the method of claim 8, and reconstruct an encrypted image corresponding to the to-be-detected image based on the image feature, wherein the encrypted image and the to-be-detected image have different image content;

    the terminal (102) is further configured to transmit the encrypted image to the liveness detection server (104);

    the liveness detection server (104) is configured to receive the encrypted image and perform liveness detection on the encrypted image through a detection network of the encryption-detection model to obtain a liveness detection result with respect to the to-be-detected object being in the to-be-detected image; and

    the liveness detection server is further configured to return the liveness detection result to the terminal (102).

10. A computer device, comprising a memory and one or more processors, wherein

    the memory stores computer-readable instructions, and

    the computer-readable instructions when executed by the one or more processors configure the one or more processors to implement the method according to any one of claims 1 to 8.

11. A computer-readable storage medium, storing computer-readable instructions, wherein the computer-readable instructions when executed by one or more processors configure the one or more processors to implement the method according to any one of claims 1 to 8.


**Patentansprüche**

1. Verfahren zur Gesichtslebendigkeitserkennung, ausführbar durch eine Computervorrichtung, wobei das Verfahren umfasst:

    Erhalten (202) eines zu erkennenden Bilds, wobei das zu erkennende Bild ein Gesicht eines zu erkennenden Objekts umfasst;

    Extrahieren (204) eines Bildmerkmals aus dem zu erkennenden Bild durch ein Verschlüsselungsnetz eines Verschlüsselungserkennungsmodells;

    Rekonstruieren (204) eines verschlüsselten Bilds, das dem zu erkennenden Bild entspricht, auf Basis des Bildmerkmals, wobei das verschlüsselte Bild und das zu erkennende Bild verschiedene Bildinhalte aufweisen; und

    Durchführen (206) von Lebendigkeitserkennung an dem verschlüsselten Bild durch ein Erkennungsnetz des Verschlüsselungserkennungsmodells zum Erhalten eines Lebendigkeitserkennungsergebnisses mit Bezug darauf, dass sich das zu erkennende Objekt in dem zu erkennenden Bild befindet, wobei das Verschlüsselungserkennungsmodell erhalten wird durch:

Erhalten einer Vielzahl von Trainingsmustern, wobei jedes Trainingsmuster der Vielzahl von Trainingsmustern ein Musterbild und eine Tatsächliche-Lebendigkeit-Kategorie, die dem Musterbild entspricht, umfasst;

Eingeben (502) des Musterbilds und der Tatsächliche-Lebendigkeits-Kategorie in einem Trainingsmuster der Vielzahl von Trainingsmustern in ein anfängliches Modell eines neuronalen Netzes;

Extrahieren (504) eines Bildmerkmals aus dem Musterbild durch das Verschlüsselungsnetz des anfänglichen Modells des neuronalen Netzes;

Rekonstruieren (504) eines verschlüsselten Bilds, das dem Musterbild entspricht, auf Basis des Bildmerkmals;

Bestimmen (504) eines ersten Verlusts gemäß einer Differenz zwischen dem Musterbild und dem verschlüsselten Bild;

Durchführen (506) der Lebendigkeitserkennung an dem verschlüsselten Bild durch das Erkennungsnetz des anfänglichen Modells des neuronalen Netzes zum Erhalten einer dem Musterbild entsprechenden Vorhergesagte-Lebendigkeit-Kategorie;

Bestimmen (506) eines zweiten Verlusts gemäß einer Differenz zwischen der Tatsächliche-Lebendigkeit-Kategorie und der Vorhergesagte-Lebendigkeit-Kategorie; und

Einstellen (508) des Modellparameters des anfänglichen Modells des neuronalen Netzes gemäß dem ersten Verlust und dem zweiten Verlust;

wobei das Verfahren, nach dem Einstellen (508) des Modellparameters des anfänglichen Modells des neuronalen Netzes gemäß dem ersten Verlust und dem zweiten Verlust, ferner Folgendes umfasst:

Erhalten (508) eines nächsten Trainingsmusters der Vielzahl von Trainingsmustern als das Trainingsmuster und Zurückkehren zu dem Schritt des Eingebens des Musterbilds und der Tatsächliche-Lebendigkeit-Kategorie in dem Trainingsmuster in das anfängliche Modell des neuronalen Netzes, sofern das trainierte Verschlüsselungserkennungsmodell nicht erhalten wurde.

2. Verfahren nach Anspruch 1, ferner umfassend:

Übertragen des verschlüsselten Bilds an einen Lebendigkeitserkennungsserver; wobei der Lebendigkeitserkennungsserver das verschlüsselte Bild empfängt und die Lebendigkeitserkennung an dem verschlüsselten Bild durch das Erkennungsnetz des Verschlüsselungserkennungsmodells zum Erhalten des Lebendigkeitserkennungsergebnisses durchführt.

3. Verfahren nach Anspruch 1, wobei das Bestimmen des ersten Verlusts gemäß der Differenz zwischen dem Musterbild und dem verschlüsselten Bild umfasst:

Erhalten eines jedem Pixel in dem Musterbild entsprechenden Ausgangswerts; Erhalten eines jedem Pixel in dem verschlüsselten Bild entsprechenden Ersatzwerts; und Berechnen des ersten Verlusts gemäß einer Differenz zwischen dem Ausgangswert und dem Ersatzwert jeder Pixelposition.

4. Verfahren nach Anspruch 1 oder 3, wobei das Einstellen des Modellparameters des anfänglichen Modells des neuronalen Netzes gemäß dem ersten Verlust und dem zweiten Verlust umfasst:

Konstruieren eines Zielverlusts auf Basis des ersten Verlusts und des zweiten Verlusts; und Einstellen des Modellparameters gemäß dem Zielverlust, so dass die Differenz zwischen dem von dem Verschlüsselungsnetz ausgegebenen verschlüsselten Bild und dem ursprünglichen Musterbild nach dem Einstellen zunimmt und die Differenz zwischen der von dem Erkennungsnetz ausgegebenen Vorhergesagte-Lebendigkeit-Kategorie und der Tatsächliche-Lebendigkeit-Kategorie nach dem Einstellen abnimmt.

5. Verfahren nach einem der Ansprüche 1 bis 4, wobei das Erhalten des zu erkennendes Bilds umfasst:

Erhalten eines Gesichtsbilds zur Identitätsprüfung; und das Verfahren ferner umfasst: Bestimmen, dass das Gesichtsbild die Identitätsprüfung besteht, in einem Fall, dass das Lebendigkeitserkennungsergebnis angibt, dass ein Gesicht in dem Gesichtsbild lebendig ist.

6. Verfahren nach einem der Ansprüche 1 bis 5, ferner umfassend:

Durchführen von Datenerweiterung an dem verschlüsselten Bild zum Erhalten einer Vielzahl erweiterter Bilder; und

das Durchführen der Lebendigkeitserkennung an dem verschlüsselten Bild durch das Erkennungsnetz des Verschlüsselungserkennungsmodells zum Erhalten des Lebendigkeitserkennungsergebnisses in Bezug darauf, dass sich das zu erkennende Objekt in dem zu erkennenden Bild befindet, umfasst:

Durchführen der Lebendigkeitserkennung an jedem erweiterten Bild in der Vielzahl von erweiterten Bildern durch das Erkennungsnetz des Verschlüsselungserkennungsmodells zum Erhalten eines jedem erweiterten Bild entsprechenden Erkennungsergebnisses; und

Bestimmen des Lebendigkeitserkennungsergebnisses in Bezug darauf, dass sich das zu erkennende Objekts in dem zu erkennenden Bild befindet, gemäß dem jedem erweiterten Bild entsprechenden Lebendigkeitserkennungsergebnis.

7. Verfahren zur Gesichtslebendigkeitserkennung, das durch eine Computervorrichtung ausführbar ist, wobei das Verfahren umfasst:

Empfangen (702) eines von einem Endgerät übertragenen verschlüsselten Bilds, wobei das verschlüsselte Bild auf Basis eines Bildmerkmals rekonstruiert wird, das von dem Endgerät durch ein Verschlüsselungsnetz eines Verschlüsselungserkennungsmodells aus einem zu erkennenden Bild extrahiert wird, wobei das verschlüsselte Bild und das zu erkennende Bild verschiedene Bildinhalte aufweisen und das zu erkennende Bild ein Gesicht eines zu erkennenden Objekts umfasst;

Durchführen (704) von Lebendigkeitserkennung an dem verschlüsselten Bild durch ein Erkennungsnetz des Verschlüsselungserkennungsmodells zum Erhalten eines Lebendigkeitserkennungsergebnisses in Bezug darauf, dass sich das zu erkennende Objekt in dem zu erkennenden Bild befindet, und

Rückmelden (706) des Lebendigkeitserkennungsergebnisses an das Endgerät;

wobei das Verschlüsselungserkennungsmodell erhalten wird durch:

Erhalten einer Vielzahl von Trainingsmustern, wobei jedes Trainingsmuster der Vielzahl von Trainingsmustern ein Musterbild und eine Tatsächliche-Lebendigkeit-Kategorie, die dem Musterbild entspricht, umfasst;

Eingeben (502) des Musterbilds und der Tatsächliche-Lebendigkeits-Kategorie in einem Trainingsmuster der Vielzahl von Trainingsmustern in ein anfängliches Modell eines neuronalen Netzes;

Extrahieren (504) eines Bildmerkmals aus dem Musterbild durch das Verschlüsselungsnetz des anfänglichen Modells des neuronalen Netzes;

Rekonstruieren (504) eines verschlüsselten Bilds, das dem Musterbild entspricht, auf Basis des Bildmerkmals;

Bestimmen (504) eines ersten Verlusts gemäß einer Differenz zwischen dem Musterbild und dem verschlüsselten Bild;

Durchführen (506) der Lebendigkeitserkennung an dem verschlüsselten Bild durch das Erkennungsnetz des anfänglichen Modells des neuronalen Netzes zum Erhalten einer dem Musterbild entsprechenden Vorhergesagte-Lebendigkeit-Kategorie;

Bestimmen (506) eines zweiten Verlusts gemäß einer Differenz zwischen der Tatsächliche-Lebendigkeit-Kategorie und der Vorhergesagte-Lebendigkeit-Kategorie; und

Einstellen (508) des Modellparameters des anfänglichen Modells des neuronalen Netzes gemäß dem ersten Verlust und dem zweiten Verlust;

wobei das Verfahren, nach dem Einstellen (508) des Modellparameters des anfänglichen Modells des neuronalen Netzes gemäß dem ersten Verlust und dem zweiten Verlust, ferner Folgendes umfasst:

Erhalten (508) eines nächsten Trainingsmusters der Vielzahl von Trainingsmustern als das Trainingsmuster, und Zurückkehren zu dem Schritt des Eingebens des Musterbilds und der Tatsächliche-Lebendigkeit-Kategorie in dem Trainingsmuster in das anfängliche Modell des neuronalen Netzes, sofern das trainierte Verschlüsselungserkennungsmodell nicht erhalten wurde.

8. Verfahren zum Trainieren eines Modells, das durch eine Computervorrichtung ausführbar ist, wobei das Verfahren umfasst:

Erhalten (802) eines Trainingsmusters, wobei das Trainingsmuster ein Musterbild und eine Tatsächliche-Lebendigkeit-Kategorie, die dem Musterbild entspricht, umfasst;

Extrahieren (804) eines Bildmerkmals aus dem Musterbild durch ein Verschlüsselungsnetz eines anfänglichen Modells eines neuronalen Netzes;

Rekonstruieren (804) eines verschlüsselten Bilds, das dem Musterbild entspricht, auf Basis des Bildmerkmals;

Bestimmen (804) eines ersten Verlusts gemäß einer Differenz zwischen dem Musterbild und dem verschlüsselten Bild;

Durchführen (806) von Lebendigkeitserkennung an dem verschlüsselten Bild durch ein Erkennungsnetz des anfänglichen Modells des neuronalen Netzes zum Erhalten einer dem Musterbild entsprechenden Vorhergesagte-Lebendigkeit-Kategorie;

Bestimmen (806) eines zweiten Verlusts gemäß einer Differenz zwischen der Tatsächliche-Lebendigkeit-Kategorie und der Vorhergesagte-Lebendigkeit-Kategorie; und

Einstellen (808) eines Modellparameters des anfänglichen Modells des neuronalen Netzes gemäß dem ersten Verlust und dem zweiten Verlust;

wobei das Verfahren, nach dem Einstellen des Modellparameters des anfänglichen Modells des neuronalen Netzes gemäß dem ersten Verlust und dem zweiten Verlust, ferner Folgendes umfasst:

Erhalten (808) eines nächsten Trainingsmusters als das Trainingsmuster und Wiederholen der Schritte vom Extrahieren eines Bildmerkmals aus dem Musterbild bis zum Einstellen des Modellparameters des anfänglichen Modells des neuronalen Netzes gemäß dem ersten Verlust und dem zweiten Verlust, sofern kein trainiertes Verschlüsselungserkennungsmodell erhalten wurde.

9. System zur Gesichtslebendigkeitserkennung, das ein Endgerät (102) und einen Lebendigkeitserkennungsserver (104) umfasst, wobei

das Endgerät (102) zum Erhalten eines zu erkennenden Bilds konfiguriert ist, wobei das zu erkennende Bild ein Gesicht eines zu erkennenden Objekts umfasst;

das Endgerät (102) ferner zum Extrahieren eines Bildmerkmals aus dem zu erkennenden Bild durch ein Verschlüsselungsnetz eines Verschlüsselungserkennungsmodells, das gemäß dem Verfahren nach Anspruch 8 trainiert ist, und Rekonstruieren eines verschlüsselten Bilds, das dem zu erkennenden Bild entspricht, auf Basis des Bildmerkmals konfiguriert ist, wobei das verschlüsselte Bild und das zu erkennende Bild verschiedene Bildinhalte aufweisen;

das Endgerät (102) ferner zum Übertragen des verschlüsselten Bilds an den Lebendigkeitserkennungsserver (104) konfiguriert ist;

der Lebendigkeitserkennungsserver (104) zum Empfangen des verschlüsselten Bilds und Durchführen der Lebendigkeitserkennung an dem verschlüsselten Bild durch ein Erkennungsnetz des Verschlüsselungserkennungsmodells zum Erhalten eines Lebendigkeitserkennungsergebnisses in Bezug darauf, dass sich das zu erkennende Objekt in dem zu erkennenden Bild befindet, konfiguriert ist; und

der Lebendigkeitserkennungsserver ferner zum Rückmelden des Lebendigkeitserkennungsergebnisses an das Endgerät (102) konfiguriert ist.

10. Computervorrichtung, die einen Speicher und einen oder mehrere Prozessor(en) umfasst, wobei

der Speicher computerlesbare Anweisungen speichert und

die computerlesbaren Anweisungen bei Ausführung durch den einen oder die mehreren Prozessor(en) den einen bzw. die mehreren Prozessor(en) zum Implementieren des Verfahrens nach einem der Ansprüche 1 bis 8 konfigurieren.

11. Computerlesbares Speichermedium, das computerlesbare Anweisungen speichert, wobei die computerlesbaren Anweisungen bei Ausführung durch einen oder mehrere Prozessoren den einen bzw. die mehreren Prozessor(en) zum Implementieren des Verfahrens nach einem der Ansprüche 1 bis 8 konfigurieren.

**Revendications**

1. Procédé de détection de vivacité de visage, exécutable par un dispositif informatique, où le procédé comprend :

obtenir (202) une image à détecter, dans lequel l'image à détecter comprend un visage d'un objet à détecter ;

extraire (204) une caractéristique d'image de l'image à détecter via un réseau de chiffrement d'un modèle de détection de chiffrement ;

reconstruire (204) une image chiffrée correspondant à l'image à détecter sur la base de la caractéristique d'image, dans lequel l'image chiffrée et l'image à détecter ont un contenu d'image différent ; et

effectuer (206) une détection de vivacité sur l'image chiffrée via un réseau de détection du modèle de détection de chiffrement pour obtenir un résultat de détection de vivacité en ce qui concerne l'objet à détecter étant dans l'image à détecter, dans lequel le modèle de détection de chiffrement est obtenu en :

obtenant une pluralité d'échantillons d'apprentissage, dans lequel chaque échantillon d'apprentissage de la pluralité d'échantillons d'apprentissage comprend une image échantillon et une catégorie de vivacité réelle correspondant à l'image échantillon ;

entrant (502) l'image échantillon et la catégorie de vivacité réelle dans un échantillon d'apprentissage de la pluralité d'échantillons d'apprentissage dans un modèle de réseau neuronal initial ;

extrayant (504) une caractéristique d'image de l'image échantillon via le réseau de chiffrement du modèle de réseau neuronal initial ;

reconstruisant (504) une image chiffrée correspondant à l'image échantillon sur la base de la caractéristique d'image ;

déterminant (504) une première perte conformément à une différence entre l'image échantillon et l'image chiffrée ;

effectuant (506) la détection de vivacité sur l'image chiffrée via le réseau de détection du modèle de réseau neuronal initial pour obtenir une catégorie de vivacité prédite correspondant à l'image échantillon ;

déterminant (506) une deuxième perte conformément à une différence entre la catégorie de vivacité réelle et la catégorie de vivacité prédite ; et

ajustant (508) le paramètre de modèle du modèle de réseau neuronal initial conformément à la première perte et à la deuxième perte ;

dans lequel après avoir ajusté (508) le paramètre de modèle du modèle de réseau neuronal initial conformément à la première perte et à la deuxième perte, le procédé comprend en outre :

obtenir (508) un échantillon d'apprentissage suivant de la pluralité d'échantillons d'apprentissage en tant que l'échantillon d'apprentissage, et retourner à l'étape consistant à entrer l'image échantillon et la catégorie de vivacité réelle dans l'échantillon d'apprentissage dans le modèle de réseau neuronal initial, à moins que le modèle de détection de chiffrement formé n'ait été obtenu.

2. Procédé selon la revendication 1, comprenant en outre :

transmettre l'image chiffrée à un serveur de détection de vivacité ;

dans lequel le serveur de détection de vivacité reçoit l'image chiffrée et effectue la détection de vivacité sur l'image chiffrée via le réseau de détection du modèle de détection de chiffrement pour obtenir le résultat de détection de vivacité.

3. Procédé selon la revendication 1, dans lequel déterminer la première perte conformément à la différence entre l'image échantillon et l'image chiffrée comprend :

obtenir une valeur originale correspondant à chaque pixel dans l'image échantillon ;

obtenir une valeur de remplacement correspondant à chaque pixel dans l'image chiffrée ; et

calculer la première perte conformément à une différence entre la valeur originale et la valeur de remplacement de chaque emplacement de pixel.

4. Procédé selon la revendication 1 ou 3, dans lequel ajuster le paramètre de modèle du modèle de réseau neuronal initial conformément à la première perte et à la deuxième perte comprend :

construire une perte cible sur la base de la première perte et de la deuxième perte ; et

ajuster le paramètre de modèle conformément à la perte cible, de sorte que la différence entre l'image chiffrée sortie par le réseau de chiffrement et l'image échantillon originale augmente après l'ajustement et la différence entre la catégorie de vivacité prédite sortie par le réseau de détection et la catégorie de vivacité réelle diminue après l'ajustement.

5. Procédé selon l'une quelconque des revendications 1 à 4, dans lequel obtenir l'image à détecter comprend :

obtenir une image de visage pour authentification d'identité ; et

le procédé comprend en outre :

déterminer que l'image de visage passe l'authentification d'identité, dans un cas dans lequel le résultat de détection de vivacité indique qu'un visage dans l'image de visage est vivant.

6. Procédé selon l'une quelconque des revendications 1 à 5, comprenant en outre :

effectuer une augmentation de données sur l'image chiffrée pour obtenir une pluralité d'images agrandies ; et

effectuer la détection de vivacité sur l'image chiffrée via le réseau de détection du modèle de détection de chiffrement pour obtenir le résultat de détection de vivacité en ce qui concerne l'objet à détecter étant dans l'image à détecter comprend :

effectuer la détection de vivacité sur chaque image agrandie dans la pluralité d'images agrandies via le réseau de détection du modèle de détection de chiffrement pour obtenir un résultat de détection correspondant à chaque image agrandie ; et

déterminer le résultat de détection de vivacité en ce qui concerne l'objet à détecter étant dans l'image à détecter conformément au résultat de détection de vivacité correspondant à chaque image agrandie.

**7.** Procédé de détection de vivacité de visage, exécutable par un dispositif informatique, où le procédé comprend :

recevoir (702) une image chiffrée transmise par un terminal, dans lequel l'image chiffrée est reconstruite sur la base d'une caractéristique d'image qui est extraite d'une image à détecter par le terminal via un réseau de chiffrement d'un modèle de détection de chiffrement, l'image chiffrée et l'image à détecter ont un contenu d'image différent, et l'image à détecter comprend un visage d'un objet à détecter ;

effectuer (704) une détection de vivacité sur l'image chiffrée via un réseau de détection du modèle de détection de chiffrement pour obtenir un résultat de détection de vivacité en ce qui concerne l'objet à détecter étant dans l'image à détecter ; et

renvoyer (706) le résultat de détection de vivacité au terminal ;

dans lequel le modèle de détection de chiffrement est obtenu en :

obtenant une pluralité d'échantillons d'apprentissage, dans lequel chaque échantillon d'apprentissage de la pluralité d'échantillons d'apprentissage comprend une image échantillon et une catégorie de vivacité réelle correspondant à l'image échantillon ;

entrant (502) l'image échantillon et la catégorie de vivacité réelle dans un échantillon d'apprentissage de la pluralité d'échantillons d'apprentissage dans un modèle de réseau neuronal initial ;

extrayant (504) une caractéristique d'image de l'image échantillon via le réseau de chiffrement du modèle de réseau neuronal initial ;

reconstruisant (504) une image chiffrée correspondant à l'image échantillon sur la base de la caractéristique d'image ;

déterminant (504) une première perte conformément à une différence entre l'image échantillon et l'image chiffrée ;

effectuant (506) la détection de vivacité sur l'image chiffrée via le réseau de détection du modèle de réseau neuronal initial pour obtenir une catégorie de vivacité prédite correspondant à l'image échantillon ;

déterminant (506) une deuxième perte conformément à une différence entre la catégorie de vivacité réelle et la catégorie de vivacité prédite ; et

ajustant (508) le paramètre de modèle du modèle de réseau neuronal initial conformément à la première perte et à la deuxième perte ;

dans lequel après avoir ajusté (508) le paramètre de modèle du modèle de réseau neuronal initial conformément à la première perte et à la deuxième perte, le procédé comprend en outre : obtenir (508) un échantillon d'apprentissage suivant de la pluralité d'échantillons d'apprentissage en tant que l'échantillon d'apprentissage, et retourner à l'étape consistant à entrer l'image échantillon et la catégorie de vivacité réelle dans l'échantillon d'apprentissage dans le modèle de réseau neuronal initial, à moins que le modèle de détection de chiffrement formé n'ait été obtenu.

**8.** Procédé d'apprentissage d'un modèle, exécutable par un dispositif informatique, où le procédé comprend :

obtenir (802) un échantillon d'apprentissage, dans lequel l'échantillon d'apprentissage comprend une image échantillon et une catégorie de vivacité réelle correspondant à l'image échantillon ;

extraire (804) une caractéristique d'image de l'image échantillon via un réseau de chiffrement d'un modèle de réseau neuronal initial ;

reconstruire (804) une image chiffrée correspondant à l'image échantillon sur la base de la caractéristique d'image ;

déterminer (804) une première perte conformément à une différence entre l'image échantillon et l'image chiffrée ;

effectuer (806) une détection de vivacité sur l'image chiffrée via un réseau de détection du modèle de réseau neuronal initial pour obtenir une catégorie de vivacité prédite correspondant à l'image échantillon ;

déterminer (806) une deuxième perte conformément à une différence entre la catégorie de vivacité réelle et la catégorie de vivacité prédite ; et

ajuster (808) un paramètre de modèle du modèle de réseau neuronal initial conformément à la première perte et à la deuxième perte ;

dans lequel après avoir ajusté le paramètre de modèle du modèle de réseau neuronal initial conformément à la première perte et à la deuxième perte, le procédé comprend en outre : obtenir (808) un échantillon d'apprentissage suivant en tant que l'échantillon d'apprentissage, et répéter les étapes à partir de l'extraction d'une caractéristique d'image de l'image échantillon pour ajuster le paramètre de modèle du modèle de réseau neuronal initial conformément à la première perte et à la deuxième perte, à moins qu'un modèle de détection de chiffrement formé n'ait été obtenu.

9. Système de détection de vivacité de visage, comprenant un terminal (102) et un serveur de détection de vivacité (104), dans lequel

le terminal (102) est configuré pour obtenir une image à détecter, dans lequel l'image à détecter comprend un visage d'un objet à détecter ;

le terminal (102) est configuré en outre pour extraire une caractéristique d'image de l'image à détecter via un réseau de chiffrement d'un modèle de détection de chiffrement formé conformément au procédé selon la revendication 8, et reconstruire une image chiffrée correspondant à l'image à détecter sur la base de la caractéristique d'image, dans lequel l'image chiffrée et l'image à détecter ont un contenu d'image différent ;

le terminal (102) est configuré en outre pour transmettre l'image chiffrée au serveur de détection de vivacité (104) ;

le serveur de détection de vivacité (104) est configuré pour recevoir l'image chiffrée et effectuer une détection de vivacité sur l'image chiffrée via un réseau de détection du modèle de détection de chiffrement pour obtenir un résultat de détection de vivacité en ce qui concerne l'objet à détecter dans l'image à détecter ; et

le serveur de détection de vivacité est configuré en outre pour renvoyer le résultat de détection de vivacité au terminal (102).

10. Dispositif informatique, comprenant une mémoire et un ou plusieurs processeurs, dans lequel

la mémoire stocke des instructions lisibles par ordinateur, et

les instructions lisibles par ordinateur lorsque exécutées par un ou plusieurs processeurs configurent l'un ou plusieurs processeurs pour mettre en oeuvre le procédé selon l'une quelconque des revendications 1 à 8.

11. Support de stockage lisible par ordinateur, stockant des instructions lisibles par ordinateur, dans lequel les instructions lisibles par ordinateur lorsque exécutées par un ou plusieurs processeurs configurent l'un ou plusieurs processeurs pour mettre en oeuvre le procédé selon l'une quelconque des revendications 1 à 8.

102

104

Network
connection

# Figure 1

202

Obtain a to-be-detected image, where the to-be-detected image includes a face of a to-be-detected object

204

Extract an image feature of the to-be-detected image through an encryption network of an encryption-detection model, and reconstruct an encrypted image corresponding to the to-be-detected image based on the image feature

206

Perform liveness detection on the encrypted image through a detection network of the encryption-detection model to obtain a liveness detection result with respect to the to-be-detected object being in the to-be-detected image

# Figure 2

Encrypt a to-be-detected image

Figure 3

User

Face verification device
1. Obtain a to-be-detected image
2. Encrypt the to-be-detected image
through an encryption network to
obtain an encrypted image

Liveness detection server
1. Receive the encrypted image
2. Perform liveness detection
on the encrypted image through
a detection network

Figure 4

502

Input a sample image and an actual liveness category, which are in a training sample, into an initial neural network

504

Extract an image feature of the sample image through an encryption network of an initial neural network, reconstruct an encrypted image corresponding to the sample image based on the image feature, and determine a first loss according to a difference between the sample image and the encrypted image

506

Perform liveness detection on the encrypted image through a detection network of the initial neural network to obtain a predicted liveness category corresponding to the sample image, and determine a second loss according to a difference between the actual liveness category and the predicted liveness category

508

Adjust a model parameter of the initial neural network according to the first loss and the second loss, and then obtain a next training sample and repeat the above training on such training sample unless a trained encryption-detection model has been obtained

202

Obtain a to-be-detected image

204

Encrypt the to-be-detected image through an encryption network of the trained encryption-detection model to obtain an encrypted image corresponding to the to-be-detected image

206

Perform liveness detection on the encrypted image through a detection network of the encryption-detection model to obtain a liveness detection result with respect to the to-be-detected object being in the to-be-detected image

Figure 5

Original sample image

↓

Encryption network based on a convolutional neural network

↓

Encrypted image

↓

Detection network based on a convolutional neural network

↓

Predicted liveness category

Actual liveness category

Construct a first loss according to a difference between the sample image and the encrypted image, and maximize the first loss

↓

Fuse the first loss and the second loss

↑

Construct a second loss according to a difference between the actual liveness category and a predicted liveness category of the sample image, and minimize the second loss

→

Update model parameters of the encryption network and the detection network by using a stochastic gradient descent algorithm

Figure 6

702

Receive an encrypted image transmitted by a terminal, where the encrypted image is reconstructed based on an image feature which is extracted from a to-be-detected image through an encryption network of a trained encryption-detection model

704

Perform liveness detection on the encrypted image through a detection network of the encryption-detection model to obtain a liveness detection result with respect to the to-be-detected object being in the to-be-detected image

706

Return the liveness detection result to the terminal

Figure 7

802

Obtain a training sample which comprises a sample image and an actual liveness category corresponding to the sample image

804

Extract an image feature of the sample image through an encryption network of an initial neural network, reconstruct an encrypted image corresponding to the sample image based on the image feature, and determine a first loss according to a difference between the sample image and the encrypted image

806

Perform liveness detection on the encrypted image through a detection network of the initial neural network to obtain a predicted liveness category corresponding to the sample image, and determine a second loss according to a difference between the actual liveness category and the predicted liveness category

808

Adjust a model parameter of the initial neural network according to the first loss and the second loss, and then obtain a next training sample and repeat the above training on such training sample unless a trained encryption-detection model has been obtained

Figure 8

Apparatus 900 for
liveness detection

902

Obtaining module

904

Detection module

Figure 9

Apparatus 1000 for
liveness detection

1002

Receiving module

1004

Liveness detection
module

1006

Transmission module

Figure 10

Apparatus 1100 for training a liveness detection model

~1102

Obtaining module

~1104

First loss determining module

~1106

Second loss determining module

~1108

Adjustment module

Figure 11

Processor

Operating system

Computer-readable instruction

Non-volatile storage medium

Computer-readable instruction

Internal memory

Memory

Network interface

Image collector

Computer device

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020108155133

- US 2019213816 A1, Grigorov Filip

**Non-patent literature cited in the description**

- **SALEM MILAD et al.** Utilizing Transfer Learning and Homomorphic Encryption in a Privacy Preserving and Secure Biometric Recognition System. *Computers,* 29 December 2018, vol. 8, 3